# EUROPÄISCHE PATENTSCHRIFT

(11) **EP 4 134 216 B1**
(45) Veröffentlichungstag und Bekanntmachung des Hinweises auf die Patenterteilung: **29.01.2025**
(21) Anmeldenummer: 22188943.9
(22) Anmeldetag: 05.08.2022
(51) Int. Cl.: B28B 1/00, E04G 21/04, B01F 27/00, B28C 5/12, B28C 7/04, B28C 7/12, B33Y 10/00, B33Y 30/00, C04B 28/02, B29C 64/209, B01F 25/314, B01F 27/192, B01F 27/50, B29C 64/106, B29C 64/336

(54) **VORRICHTUNG UND VERFAHREN ZUR HERSTELLUNG VON BAUWERKEN ODER OBJEKTEN AUS EINGEFÄRBTEM BETON**
DEVICE AND METHOD FOR MANUFACTURING STRUCTURES OR OBJECTS FROM COLOURED CONCRETE
DISPOSITIF ET PROCÉDÉ DE FABRICATION DE BÂTIMENTS OU D'OBJETS EN BÉTON COLORÉ

(30) Priorität: 12.08.2021 DE 102021121046
(43) Veröffentlichungstag der Anmeldung: 15.02.2023
(73) Patentinhaber: Wilhelm Tölke GmbH & Co. KG, 90431 Nürnberg (DE)
(72) Erfinder: Hamper, André, 90491 Nürnberg (DE); Härtenberger, Lukas, 6800 Feldkirch (AT); Strietzel, Frank, 9473 Gams (CH)
(74) Vertreter: Tergau & Walkenhorst Intellectual Property GmbH

(56) Entgegenhaltungen:
- WO-A1-2019/048752
- KR-A- 20190 050 509
- US-A1- 2013 272 083
- US-A1- 2020 171 451

## Beschreibung

Die Erfindung betrifft eine Vorrichtung und ein Verfahren zur Herstellung von Bauwerken oder Objekten aus eingefärbtem Beton.

Die Herstellung und Verarbeitung von eingefärbten Betonen ist grundsätzlich aus dem Betonbau bekannt. Im Mischprozess wird zu den Bestandteilen der Betonrezeptur noch eine Farbe, in flüssiger oder fester Form, zugegeben. Somit wird die gesamte Masse im Mischer eingefärbt und anschließend verarbeitet. Der Transport zum Herstellort kann über Fahrbetonmischer, Pumpen und Schläuche, Transportbehälter usw. erfolgen. Dieser Transportweg hat für die Farbe keinen Einfluss. Die herkömmliche Verarbeitungsmethode bei Beton ist Gießen. Dabei wird der Beton in eine Schalung eingebracht und durch nachträgliches Verdichten durch eine Rüttelflasche eine möglichst porenfreie, homogene Masse erzeugt. Diese Masse bindet ab (Erstarrungsprozess), und im letzten Arbeitsschritt kann die Schalung nach einer gewissen Zeitspanne entfernt werden.

Theoretisch könnten auf diese Weise unterschiedliche Lagen von eingefärbten Betonen in das Bauwerk oder Objekt eingebracht werden. Es müssten jedoch immer gewisse Parameter eingehalten werden, welche die Prozessdauer verlängern würden. Beim Verdichten des Betons durch Rütteln findet nämlich eine leichte Durchmischung der Masse statt, und somit ist keine klar ersichtliche Trennung der eingebrachten und unterschiedlich eingefärbten Betonschichten mehr möglich. Um klar abgegrenzte Farbmuster zu ermöglichen, müsste daher gewartet werden, bis eine Schicht abgebunden hat, um erst dann die nächste Schicht in die Schalung einzufüllen. Dort dürfte die Rüttelflasche nur um die vorherige Schichtstärke eindringen und so nur diese letzte Schicht verdichten. Dies würde aber zu Problemen in der Verbindung zwischen den Schichten führen, und somit könnte die Tragfähigkeit der gesamten Betonkonstruktion nicht mehr gewährleistet werden. Außerdem müssten bei dieser Vorgehensweise sämtlich Mischer und Werkzeuge, die mit der Farbe in Berührung kommen, aufwendig gereinigt werden.

Eine Vorrichtung zum 3D-Betondruck mit den Merkmalen des Oberbegriffs von Anspruch 1 ist aus WO 2019/048752 A1 bekannt. US 2020/171451 A1 und KR 2019 0050509 A offenbaren ebenfalls eine Vorrichtung zum 3D-Betondruck.

Aufgabe der Erfindung ist es, eine Vorrichtung und ein Verfahren zur Herstellung von Bauwerken oder Objekten aus eingefärbtem Beton anzugeben, welche möglichst schnell, effizient und zuverlässig arbeiten und eine einfache Reinigung ermöglichen, wobei jeder gewünschte Farbton erzeugbar sein soll.

Die genannte Aufgabe wird erfindungsgemäß gelöst durch eine Vorrichtung mit den Merkmalen des Anspruchs 1 sowie ein zugehöriges Verfahren gemäß Anspruch 8.

Demnach ist eine Vorrichtung zum 3D-Betondruck mit einem bewegbar an einem Roboterarm befestigten Extruder vorgesehen, wobei unter anderem
- der Extruder einen Einlass und einen Düsenauslass und dazwischen liegend einen Förderkanal oder zumindest einen Abschnitt davon für einen Flüssigbetonstrom aufweist,
- dem Extruder eine Betonförderpumpe und ein Betonförderschlauch zur Zuführung des Flüssigbetons vorgeschaltet sind,
- der Extruder eine Einspritzvorrichtung zur Einspritzung eines Erstarrungsbeschleunigers in den Flüssigbetonstrom aufweist,
- der Extruder ein Mischrohr oder eine Mischkammer zur Mischung des Flüssigbetonstroms und des eingespritzten Erstarrungsbeschleunigers aufweist,
- eine Einspritzvorrichtung zur Einspritzung mindestens eines Farbstoffs in den Flüssigbetonstrom vorgesehen ist,
wobei die Einspritzvorrichtung für den jeweiligen Farbstoff in Strömungsrichtung des Flüssigbetonstroms gesehen vor der Einspritzvorrichtung des Erstarrungsbeschleunigers angeordnet ist.

Die Erfindung geht von der Überlegung aus, das gewünschte Bauwerk oder Objekt lagen- oder schichtweise im extrusionsbasierten 3D-Druck aufzubauen und dabei während der Extrusion die erforderlichen Farbstoffe durch Einspritzen in den Flüssigbetonstrom einzubringen. Durch gesteuerte Farbeinspritzung ist es möglich, das Bauwerk oder Objekt punktuell, graduell oder gesamtheitlich einzufärben. Die Vorhaltung großer Mengen an eingefärbtem Flüssigbeton in Mischbehältern oder dergleichen wird dabei vermieden. Eine gelegentlich erforderliche Reinigung beschränkt sich im Wesentlichen auf den Extruder und die Einspritzkomponenten.

Um ein hinreichend schnelles Abbinden der einzelnen Lagen oder Schichten auf dem Bauwerk oder Objekt zu gewährleisten, wird dem Flüssigbetonstrom im 3D-Extrusionsdruck bevorzugt kurz vom der Durchlaufen der Extrusionsdüse ein Erstarrungsbeschleuniger beigemischt. Dies erfolgt üblicherweise an einem in den Extruder integrierten Verteilerring. Dort erfolgt auch eine ggf. vorgesehene Einspritzung weiterer Additive. Auf den ersten Blick bietet es sich an, die nunmehr beizumengenden Farbstoffe ebenfalls an dieser bereits existierenden Schnittstelle in den Flüssigbetonstrom einzuspritzen. Durch Testreihen und Versuche wurde jedoch überraschenderweise herausgefunden, dass es sinnvoll ist, die Einspritzung der Farbstoffe in Bezug auf die Strömungsrichtung des Betons weiter stromaufwärts, also vor den Verteilerring für den Erstarrungsbeschleuniger zu verlagern, um eine gute Durchmischung der Farbstoffe mit dem Beton zu erzielen. Dies gilt besonders für Farbstoffe auf Flüssigpigmentbasis, die aufgrund ihrer emulsionsartigen Einbettung in die Betonmasse eine bedeutend längere Mischzeit erfordern als der reaktivfreudige Erstarrungsbeschleuniger.

Der Abstand zwischen der Einspritzvorrichtung für den jeweiligen Farbstoff und der Einspritzvorrichtung für den Erstarrungsbeschleuniger liegt bevorzugt im Bereich von 20 bis 100 cm, entsprechend einer Verzögerungszeit von mindestens einer halben Sekunde bis hin zu mehreren Sekunden bei typischen Betonfließgeschwindigkeiten von 0,05 bis 0,2 m/s.

Erfindungsgemäß umfasst die Einspritzvorrichtung für den jeweiligen Farbstoff einen Farbeinspritzring mit mindestens einer zugehörigen Farbeinspritzdüse. Bei mehreren Farben könnten im Prinzip mehrere Farbeinspritzringe hintereinander angeordnet sein. Vorteilhaft ist es jedoch, wenn ein gemeinsamer Farbeinspritzring mit einer Mehrzahl von auf dem Ringumfang verteilten Farbeinspritzdüsen vorhanden ist. Dadurch können bei Bedarf mehrere Farben in Strömungsrichtung des Betons gesehen an der gleichen Stelle in den Betonstrom eingespritzt werden, so dass für alle Farben dieselbe Verzögerungszeit besteht. Der Farbeinspritzring könnte fest in das Extrusionsrohr integriert oder eingebaut sein, bevorzugt ist jedoch eine separate, herausnehmbare oder auswechselbare Ausgestaltung. Besonders bevorzugt ist es in diesem Zusammenhang, wenn der Extruder einlassseitig einen Anschlussstutzen aufweist und der Farbeinspritzring zwischen dem Betonförderschlauch und dem Anschlussstutzen angeordnet ist. Zur druckdichten Verbindung der Komponenten bei der Montage können beispielsweise Schraubgewinde und/oder Klemmverbindungen vorgesehen sein.

Für eine steuerbare Farbeinspritzung ist es zweckmäßig, wenn die jeweilige Farbeinspritzdüse eine verstellbare Düsennadel zur Einstellung des Einspritzdrucks und/oder der Einspritzmenge aufweist. Bevorzugt ist eine vom Druck des Flüssigbetonstroms im Förderkanal abhängige Steuerung der Düsennadel vorhanden. Dieser Druck wird daher durch geeignete Sensoren erfasst. Ferner ist es für eine gute Durchmischung der Farbe mit dem Betonstrom vorteilhaft, wenn die jeweilige Farbeinspritzdüse einen zumindest teilweise gegen die Strömungsrichtung des Flüssigbetonstroms gerichteten Düsenauslass aufweist.

In erfindungsgemäßer Ausgestaltung ist die jeweilige Farbeinspritzdüse über eine Farbpumpe und eine Farbleitung mit einem Farbvorratsbehälter verbunden, wobei diese Komponenten zusammen einen Farbstrang bilden. Erfindungsgemäß sind mehrere Farbstränge vorhanden, und jeder Farbstrang ist unabhängig bzw. separat von den anderen Farbsträngen, insbesondere unabhängig ansteuerbar. Besonders bevorzugt sind vier Farbstränge mit den Grundfarben Cyan (Blau), Magenta (Purpur) und Yellow (Gelb) nebst Black (Schwarz) gemäß dem CMYK-Farbmodell sowie optional ein zusätzlicher weißer Farbstrang zur Aufhellung der üblicherweise vorliegenden grauen Grundfarbe des Betons vor der Einfärbung. Damit lässt sich nach den Prinzipien der subtraktiven Farbmischung jeder beliebige gewünschte Farbton erzeugen. Vorteilhafterweise ist der jeweilige Farbstoff ein Flüssigpigmentfarbstoff.

Vorteilhafterweise ist in dem Mischrohr oder in der Mischkammer des Extruder ein aktiver Mischer mit einer Anzahl von an einer Mischerwelle befestigten Mischelementen angeordnet, wobei die Mischerwelle durch einen Antriebsmotor rotierbar ist. Besonders bevorzugt ist es, wenn sich die Mischerwelle bis in einen Abschnitt des Förderkanals vor der Einspritzvorrichtung für den Erstarrungsbeschleuniger erstreckt und dort eine Anzahl zusätzlicher Mischelemente an der Mischerwelle befestigt ist. Auf diese Weise ist gewissermaßen - in Strömungsrichtung des Betons gesehen - noch vor Einspritzung des Erstarrungsbeschleunigers eine erste Mischzone etabliert, in der der Betonstrom mit Unterstützung von rotierenden Mischelementen mit den Farbstoffen vermischt wird, sowie eine zweite Mischzone weiter stromabwärts, um zusätzlich den Erstarrungsbeschleuniger mit dem dort bereits eingefärbten Betonstrom zu vermischen.

In einer bevorzugten Ausgestaltung ist eine Anlagensteuerung vorhanden, die eine farbige digitale Repräsentation des zur erstellenden Bauwerks oder Objekts in einen mittels des Roboterarms realisierbaren Pfad für den Düsenauslass des Extruders konvertiert und entsprechend der gewünschten Farbgebung die Einspritzvorrichtung für den jeweiligen Farbstoff ansteuert. Das bedeutet beispielsweise, dass ein in einem Computer hinterlegtes CAD-Modell des Bauwerks oder Objekts in einen für 3D-Druck geeigneten Verfahrweg für den Extruder konvertiert wird, wobei der Betonstrom durch den Extruder während des Verfahrens geeignet gesteuert oder geregelt wird. Zugleich wird die gewünschte Farbgebung des Bauwerks oder Objekts in ein auf die verfügbaren Farbstoffe abgestimmtes Farbmodell, in der Regel CMYK, umgerechnet, und eine auf den Verfahrweg des Extruders abgestimmte Dosierung der Farbstoffe ermittelt und zur Ansteuerung von Einspritzdruck und/oder Einspritzmenge verwendet.

Besonders bevorzugt ist es dabei, wenn die Anlagensteuerung derart ausgelegt ist, dass eine Verzögerung zwischen der Einspritzung der jeweiligen Farbe in den Flüssigbetonstrom und dem Austritt am Düsenauslass vorausschauend berücksichtigt wird.

Im Hinblick auf das Verfahren wird die eingangs genannte Aufgabe gelöst durch ein Verfahren zur Herstellung eines Bauwerks oder Objekts durch 3D-Betondruck unter Verwendung einer Vorrichtung der oben beschriebenen Art, wobei ein Flüssigbetonstrom durch einen Extruder geleitet und an einem Düsenauslass des Extruders appliziert wird, wobei in dem Extruder ein Erstarrungsbeschleuniger in den Flüssigbetonstrom eingespritzt wird, und wobei in Strömungsrichtung des Flüssigbetonstroms gesehen vor der Einspritzung des Erstarrungsbeschleunigers mindestens ein Farbstoff in den Flüssigbetonstrom zur Einfärbung desselben eingespritzt wird.

Dabei ist es von Vorteil, wenn der Extruder durch eine Anlagensteuerung mittels eines Roboters oder eine ähnliche Verstell- oder Verfahrvorrichtung entlang eines vorgegebenen Pfades bewegt wird und der jeweilige Farbstoff gemäß einer gewünschten Farbgebung des Bauwerks oder Objekts in den Flüssigbetonstrom eingespritzt wird, wobei vorteilhafterweise eine Verzögerung zwischen der Einspritzung der jeweiligen Farbe in den Flüssigbetonstrom und dem Austritt am Düsenauslass vorausschauend berücksichtigt wird.

Weiter ist es von Vorteil, wenn die jeweilige Farbeinspritzdüse einen steuerbaren Überströmquerschnitt aufweist, wobei zur Steuerung des Überströmquerschnitts ein mittels Sensoren gemessener Druck des Flüssigbetonstroms als Berechnungsgrundlage herangezogen wird. Der Einspritzdruck des jeweiligen Farbstoffs wird dabei bevorzugt im Bereich des 1,5 bis 2-fachen des Arbeitsdrucks des Flüssigbetonstroms eingestellt.

Die zur Vorrichtung genannten Merkmale und Vorteile lassen sich sinngemäß auf das Verfahren übertragen, so dass an dieser Stelle auf weitere Wiederholungen verzichtet wird.

Ein Ausführungsbeispiel der Erfindung wird anhand der beigefügten Zeichnungen näher erläutert. Es zeigt in jeweils vereinfachter und schematischer Darstellung:
- FIG. 1: eine Prinzipskizze einer Vorrichtung zum 3D-Betondruck,
- FIG. 2: ein Detail aus FIG. 1, nämlich einen Extruder für 3D-Betondruck,
- FIG. 3: einen Querschnitt durch einen Farbeinspritzring der Vorrichtung gemäß FIG. 1,
- FIG. 4: einen zugehörigen Längsschnitt,
- FIG. 5: eine Farbeinspritzdüse in drei verschiedenen Betriebszuständen, und
- FIG. 6: eine nicht beanspruchte alternative Ausführung eines Extruders.

Gleichartige Elemente sind in allen Figuren mit denselben Bezugszeichen versehen.

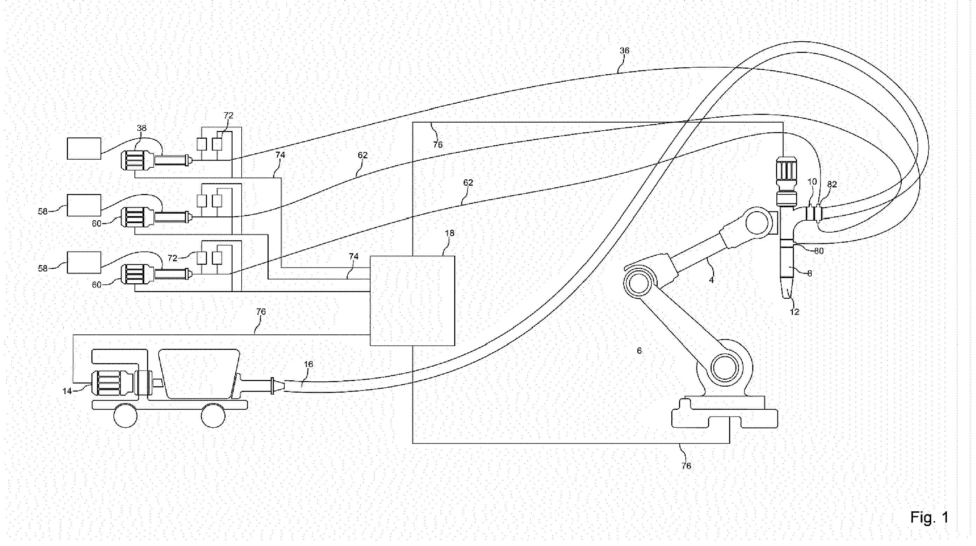

FIG. 1 gibt einen schematischen Überblick über eine Vorrichtung 2 bzw. Anlage zum 3D-Betondruck, auch als 3D-Betondrucker bezeichnet. Ein Kernelement der Vorrichtung 2 ist ein an einem schwenkbaren Roboterarm 4 eines Industrieroboters 6 befestigter Extruder 8 mit einem Einlass 10 und mit einem Düsenauslass 12 für eine Betonmischung. Der beispielsweise als Transportbeton (Lieferbeton) oder Baustellenbeton bereitgestellte Flüssigbeton wird im Betrieb mittels einer Betonförderpumpe 14 oder kurz Betonpumpe über einen Betonförderschlauch 16 dem Extruder 8 zugeführt, darin geeignet aufbereitet und schließlich über den Düsenauslass 12 schicht- bzw. streifenweise auf das zu fertigende Objekt appliziert, wo er schnell aushärtet (additive Fertigung). Dabei wird der Roboterarm 4 mittels einer zugehörigen Anlagensteuerung 18 derart geführt, dass der Düsenauslass 12 entsprechend der gewünschten Konturierung und Schichtung des Objekts einem vorgegebenen dreidimensionalen Pfad folgt. Die Anlagensteuerung 18 steuert ferner die Betonförderpumpe 14 und einen in den Extruder 8 integrierten Mischer sowie eine ggf. vorhandene Düsenverstellung am Düsenauslass 12. Durch die Steuerung der genannten Komponenten wird der Druck im Betonförderschlauch 16 und im Extruder 8 in einem bevorzugten Betriebsbereich gehalten. Optional wird dadurch auch die aktuell am Düsenauslass 12 applizierte Schichtdicke beeinflusst. Unterschiedliche Bahnstärken lassen sich aber auch durch unterschiedliche Bewegungsgeschwindigkeiten des Extruders 8 und damit des Düsenauslasses 12 erzielen.

Der Extruder 8 oder jedenfalls der Düsenauslass 12 (Extrusionsdüse) kann somit als Druckkopf eines 3D-Betondruckers angesehen werden.

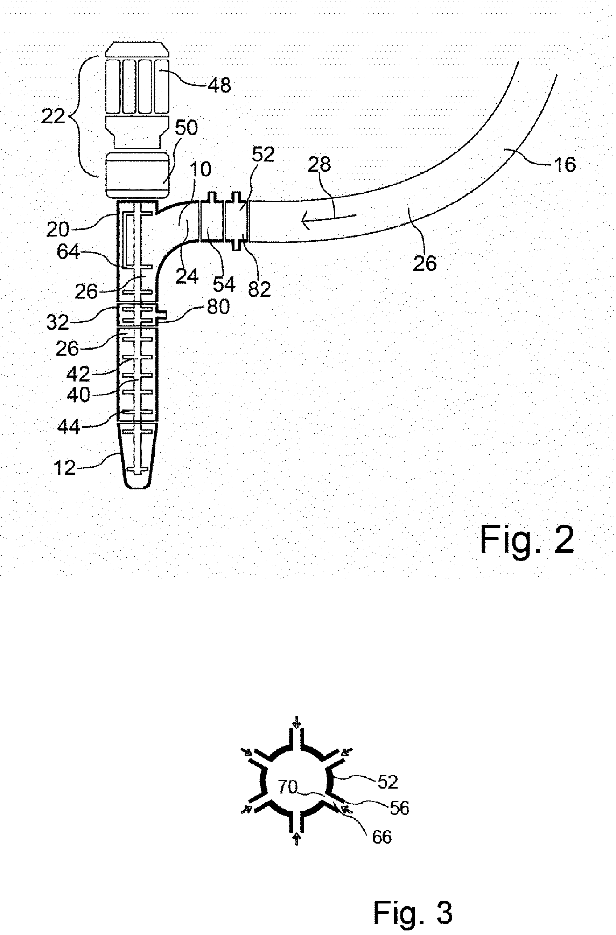

Der in FIG. 2 vergrößert dargestellte Extruder 8 hat im Wesentlichen die Gestalt eines geradlinigen Rohres mit einem sich konisch verjüngenden Düsenauslass 12 und einem T-förmigen Zwischenstück 20, auch Aufbereitungsbrücke genannt, am einlassseitigen Ende. Die geradlinige Verlängerung des Zwischenstücks 20 trägt einen Getriebemotor 22 für einen weiter unten noch zu beschreibenden Mischer 40. Der abzweigende Anschlussstutzen 24 bildet den Einlass 10 in den Extruder 8, an den der Betonförderschlauch 16 angeschlossen ist. Insgesamt umschließen der Betonförderschlauch 16 und das Gehäuse des Extruders 8 einen druckdichten Förderkanal 26 für den mit Hilfe der Betonförderpumpe 14 unter Druck zugeführten und am Düsenauslass 12 austretenden Beton. Der Anschlussstutzen 24 ist vorzugsweise derart abgerundet, dass ein kontinuierlicher Strom des Betons im Förderkanal 26 in Betonförderrichtung bzw. Strömungsrichtung 28 unterstützt wird.

Um ein hinreichend schnelles Abbinden bzw. Aushärten des applizierten Betons auf dem Objekt zu gewährleisten, wird dem zuströmenden Flüssigbeton im Extruder 8 kurz vor dem Düsenauslass 12 ein Erstarrungsbeschleuniger, kurz Beschleuniger, durch eine Einspritzvorrichtung 80 beigemischt. Zur Realisierung der Einspritzvorrichtung 80 für Erstarrungsbeschleuniger ist zwischen dem Zwischenstück 20 und dem weiter stromabwärts liegenden Rohrabschnitt, der als Mischrohr 30 wirksam ist, ein Verteilerring 32 mit mindestens einer Einspritzdüse für Erstarrungsbeschleuniger angeordnet. Vorzugsweise sind mehrere strömungsmäßig parallel mit Erstarrungsbeschleuniger beaufschlagte und über den Ringumfang verteilte Einspritzdüsen vorgesehen, wie in der früheren Patentanmeldung DE 10 2020 129 079.9 beschrieben. Die Zufuhr des Erstarrungsbeschleunigers erfolgt mit Hilfe eines in FIG. 1 dargestellten, an den Einlass des Verteilerrings 32 angeschlossenen Erstarrungsbeschleuniger-Förderschlauches 36 und einer zugehörigen Erstarrungsbeschleuniger-Förderpumpe 38. Die Anlagensteuerung 18 steuert die Erstarrungsbeschleuniger-Förderpumpe 38 und ggf. die Einspritzdüsen in dem Verteilerring 32 in einer auf den Betrieb der Betonförderpumpe 14 bzw. auf den Betonfluss im Förderkanal 26 abgestimmten Weise.

Die Bevorratung des Erstarrungsbeschleunigers kann bevorzugt in einem Vorrats- und Aufbereitungssystem gemäß der Patentanmeldung DE 10 2021 104 997.0 erfolgen.

In analoger Weise zur Einbringung von Erstarrungsbeschleuniger in den Betonstrom kann mit Hilfe von in den Verteilerring 32 eingesetzten, in den Förderkanal 26 hineinragenden Einspritzdüsen eine Einspritzung von Additiven wie beispielsweise Reaktionsbeschleuniger oder Reaktionsverzögerer, Fließmittel, Entschäumer, Stabilisatoren oder dergleichen erfolgen.

Für eine innige Vermischung des zugeführten, vergleichsweise zähen Flüssigbetons und des am Verteilerring 32 eingespritzten Erstarrungsbeschleunigers weist der Extruder 8 einen aktiven Mischer 40 nach dem Prinzip eines Durchlaufmischers auf. Dazu sind in dem Mischrohr 30 stromabwärts des Verteilerrings 32 an einer rotierbaren Mischerwelle 42 mindestens ein, vorzugsweise mehrere flügelartige Mischelemente 44 angeordnet, die bei rotierender Mischerwelle 42 für die gewünschte Durchmischung sorgen. Die parallel und vorzugsweise konzentrisch zum Mischrohr 30 ausgerichtete Mischerwelle 42 ist durch die geradlinige Verlängerung des Zwischenstücks 20 zu der druckdicht angeflanschten Antriebseinheit geführt, die einen vorzugsweise elektrisch angetriebenen Antriebsmotor 48 und ein zwischen die Motorwelle und die Mischerwelle 42 geschaltetes Untersetzungsgetriebe 50 umfasst. Antriebsmotor 48 und Untersetzungsgetriebe 50 zusammen bilden den Getriebemotor 22, der auch als Antriebseinheit bezeichnet wird. Die Steuerung der Antriebseinheit wird wiederum durch die Anlagensteuerung 18 übernommen.

Für eine besondere ansprechende ästhetisch-optische Gestaltung des zu fertigenden Objekts ist die Vorrichtung 2 gemäß FIG. 1 und 2 mit einer Zusatzfunktion zur gesteuerten, lokal (punktuell) variablen Einfärbung des extrudierten Betons im kontinuierlichen Prozess des 3D-Drucks ausgestattet. Durch die gesteuerte Einbringung von Farbe werden sowohl Farbwechsel als auch verschiedenste Musterungen ermöglicht. Dadurch können Objekte gedruckt werden, welche Grafiken direkt integriert haben. Durch die Durchfärbung des Betons werden diese Farbelemente auch qualitativ hochwertig und langlebig materialisiert, ohne dass weitere Prozessschritte notwendig werden.

Der überraschenden Erkenntnis folgend, dass geeignete Farbstoffe, insbesondere Flüssigpigment-Emulsionen, eine deutlich längere Mischzeit mit dem Beton erfordern als Erstarrungsbeschleuniger und andere Additive, erfolgt die Einspritzung der Farbstoffe nicht am Verteilerring 32, sondern weiter stromaufwärts, also in in Strömungsrichtung 28 des Betons gesehen vor dem Verteilerring 32, an einer separaten Einspritzvorrichtung 82 für Farbstoff mit einem Farbeinspritzring 52. Der Farbeinspritzring 52 sitzt im Ausführungsbeispiel gemäß FIG. 2 als separates Bauteil zwischen dem abzweigenden einlassseitigen Anschlussstutzen 24 des Extruders 8 und dem Betonförderschlauch 16. Alternativ könnte der Farbeinspritzring 52 oder ein von der Funktion äquivalentes Bauteil in den Grundkörper bzw. in das Gehäuse des Extruders 8, insbesondere in den abzweigenden Anschlussstutzen 24, integriert sein.

Hier im Beispiel ist zudem ein separater Spülwassereinspritzring 54 mit einer Einspritzdüse für Spülwasser als optionale Komponente zwischen dem Anschlussstutzen 24 und dem Farbeinspritzring 52 angeordnet. Alternativ könnte eine Einspritzdüse für Spülwasser in den Farbeinspritzring 52 integriert sein. Der Spülwassereinspritzring 54 könnte in Strömungsrichtung des Betons gesehen auch vor dem Farbeinspritzring 52 liegen. Die Spülwassereinspritzung dient zur Reinigung der stromabwärtigen Leitungsabschnitte während einer Reinigungsphase. Ein in die Spülwassereinspritzdüse oder in die angeschlossene Spülwasserleitung (nicht dargestellt) integriertes Rückschlagventil vermeidet Eindringen von Beton in die Spülwasserleitung während des 3D-Druckbetriebes.

Der Farbeinspritzring 52 weist eine Anzahl von in den Förderkanal 26 einspritzenden Farbeinspritzdüsen 56 auf, wie in der schematischen Querschnittsdarstellung gemäß FIG. 3 ersichtlich, und zwar vorzugsweise für jede der zur Eindüsung vorgesehenen Farben eine. In FIG. 1 ist zur Vereinfachung rein exemplarisch der Fall von zwei Farben dargestellt. Für jede Farbe gibt es einen Farbvorratsbehälter 58, der über eine Farbpumpe 60 und eine Farbleitung 62 mit der zugeordneten Farbeinspritzdüse 56 im Farbeinspritzring 52 medienseitig verbunden ist. Jeder der parallelen Farbstränge wird durch die Anlagensteuerung 18 separat bzw. unabhängig angesteuert, wie weiter unten noch genauer erläutert ist. Dadurch ist eine steuerbare Farbmischung ermöglicht. In der Praxis sind bevorzugt die Grundfarben Cyan (Blau), Magenta (Purpur) und Yellow (Gelb) nebst Black (Schwarz) und White (Weiß) vorgesehen, die sich nach dem Prinzip der subtraktiven Farbmischung im CMYB(W) Farbmodell zu jedem gewünschten Farbton mischen lassen. Die weiße Farbe wird zur Aufhellung des üblicherweise grauen Betons und damit zur Verbesserung der Farbintensität der beigemischten Farben benötigt. Bei Verwendung von Weißzement als Betonbestandteil kann auf die Beimischung von weißer Farbe gegebenenfalls verzichtet werden. Es sind demnach vorzugsweise fünf Farbstränge mit jeweils separatem Farbvorratsbehälter 58, Farbpumpe 60, Farbleitung 62 und Farbeinspritzdüse 56 vorgesehen, wobei die fünf Farbeinspritzdüsen 56 bevorzugt gleichmäßig über den Umfang des Farbeinspritzringes 52 verteilt sind, wodurch eine ungünstige gegenseitige Beeinflussung der Farbströme vermieden wird.

Als Farbstoffe werden bevorzugt Flüssigpigmentfarbstoffe verwendet, die jeweils als Emulsion vorliegen. Es sind aber auch in Flüssigkeit gelöste Pigmente in Pulverform oder fließfähige Farbpasten denkbar.

Ein in die jeweilige Farbleitung 62 integriertes Rückschlagventil, in Strömungsrichtung der Farbe gesehen vorzugsweise knapp vor der Farbeinspritzdüse 56, verhindert bei fehlerhafter oder zu langsamer Steuerung (siehe unten) ein Eindringen von Beton in die Farbleitung 62.

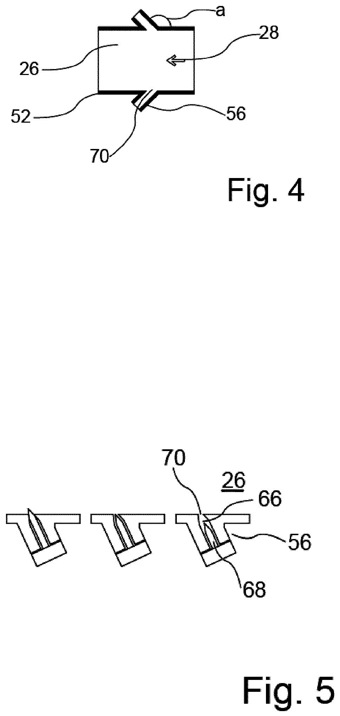

Wie im schematischen Längsschnitt gemäß FIG. 4 dargestellt, ist die jeweilige Farbeinspritzdüse 56 bevorzugt derart geneigt ausgerichtet (Winkel α zwischen 90 und 180°), dass die Farbeinspritzung zumindest teilweise entgegen der Strömungsrichtung 28 des Betons im Förderkanal 26 erfolgt. Durch die Einspritzung schräg entgegen der Stromrichtung wird die Durchmischung des jeweiligen Farbstoffes mit dem Beton verbessert.

Eine weitere Durchmischung des Betons und der einspritzten Farbe erfolgt optional noch vor Einspritzung des Erstarrungsbeschleunigers im Zwischenstück 20 durch in diesem Bereich rotierbar angebrachte flügelartige Mischelemente 64. Die Mischelemente 64 sind vorzugsweise an derselben Mischerwelle 42 befestigt, die auch die Mischelemente 44 im Mischrohr 30 stromabwärts des Verteilerrings 32 trägt. Es gibt also vorzugsweise eine obere Mischereinheit im Zwischenstück 20 und eine untere Mischereinheit im Mischrohr 30, die mit derselben Umdrehungszahl durch dieselbe Mischerwelle 42 mit derselben Antriebseinheit angetrieben werden. In diesem Sinne kann man das Mischrohr 30 auch als unteres Mischrohr und den geradlinigen Abschnitt des Zwischenstücks 20 als oberes Mischrohr bezeichnen. Die Mischelemente 44, 64 der beiden Mischereinheiten können jedoch entsprechend dem jeweiligen Einsatzzweck in Menge und Aufmachung (Geometrie, Größe) unterschiedlich ausgebildet sein.

Zur Farbeinspritzung sollte der Einspritzdruck der jeweiligen Farbeinspritzdüse 56 größer als der Arbeitsdruck des Betons im Förderkanal 26 sein, um eine Verstopfung bzw. Materialstau in der Farbleitung 62 zu vermeiden. Da dieser Arbeitsdruck im Förderkanal 26 innerhalb vorgegebener Bereiche variieren kann, ist die jeweilige Farbeinspritzdüse 56 zweckmäßigerweise als verstellbare Nadeldüse ausgebildet, um durch geeignete Wahl der Düsennadelstellung eine Anpassung an den aktuellen Arbeitsdruck vornehmen zu können. FIG. 5 veranschaulicht in schematischer Weise die längsverschiebbar in den Düsenkanal 66 eingesetzte Düsennadel 68, auch als Verschlussnadel bezeichnet, die je nach Stellung unterschiedlich weit in den Düsenauslass 70 hineinragt und dementsprechend unterschiedlich große Überströmquerschnitte freigibt. Bei relativ hohem Arbeitsdruck im Förderkanal 26 wird die Düsennadel 66 durch eine hier nicht dargestellte, vorzugsweise elektrische Verstelleinrichtung relativ weit nach vorne bis an den Rand des Förderkanals 26 hineingeschoben (mittleres Bild), so dass der Überströmquerschnitt relativ klein und der Einspritzdruck entsprechend hoch ist. Bei niedrigem Arbeitsdruck im Förderkanal 26 wird die Düsennadel 68 weiter hinten positioniert (rechtes Bild) mit entsprechend großem Überströmquerschnitt und geringerem Einspritzdruck. Wenn die Düsennadel 68 ganz nach vorne in den Förderkanal 26 hineingeschoben ist (linkes Bild), verschließt sie den Düsenauslass 70 vollständig. Bei im Wesentlichen konstantem Arbeitsdruck im Förderkanal 26 bewirkt eine Verstellung der Düsennadel 68 eine Änderung der Einspritzmenge pro Zeiteinheit.

Die gemäß FIG. 5 bevorzugt konische Form der Düsennadel 68 am vorderen Ende ermöglicht eine präzise Anpassung des Überströmquerschnitts, um das gewünschte Gleichgewicht von Druck und Fördermengen herzustellen.

Zur optimierten Ansteuerung der jeweiligen Farbpumpe 60 und der Verstelleinrichtung in/an der jeweiligen Farbeinspritzdüse 56 nimmt die Anlagensteuerung 18 vorteilhafterweise über geeignete Sensoren 72 und Messeleitungen 74, von denen in FIG. 1 einige schematisch angedeutet sind, verschiedene Messwerte auf, insbesondere den Druck in der jeweiligen Farbleitung 62 und/oder den Durchsatz von Farbe durch die Farbleitung 62 betreffende Messwerte, etwa die Strömungsgeschwindigkeit und/oder den Massen- oder Volumenstrom. Derartige Messwerte betreffend Arbeitsdruck, Durchsatzmenge und/oder Strömungsgeschwindigkeit werden bevorzugt mittels entsprechender Sensoren auch für den Betonfluss durch den Förderkanal 26 ermittelt und der Anlagensteuerung 18 zur Verfügung gestellt, die daraus unter anderem Stellwerte für die Stellung der jeweiligen Düsennadel 68 ermittelt und über zugeordnete Steuerleitungen 76 an deren Verstelleinrichtung ausgibt. Im Hinblick auf den Arbeitsdruck der Betonströmung im Förderkanal 26 als Führungsgröße der Steuerung spricht man auch von einer druckgesteuerten Farbeinspritzdüse 56.

In der Anlagensteuerung 18 ist ein 3D-Modell, insbesondere ein Gittermodell, des zu fertigenden Objektes hinterlegt, wobei jedem Raumpunkt beispielsweise anhand eines RGB-Farbmodells - beruhend auf einer additiven Farbmischung der Grundfarben Rot, Grün, Blau - ein individueller Farbwert zugeordnet ist. Ein Prozessrechner der Anlagensteuerung 18 ermittelt daraus durch Zerlegung der Geometrie in Schichten (3D-Slicing) analog zur bekannten CNC-Technologie ein digitales Pfadmodel für den Verfahrweg des 3D-Druckkopfes, sprich des Extruders 8, und konvertiert für jeden Pfadpunkt die RGB-Farbdaten in CMYB(W)-Farbwerte, vorzugsweise unter Berücksichtigung einer Farbwertanpassung an den Zementgehalt der Betonmischung. Diese Daten werten anschließend in die jeweiligen Pump- oder Fördermengen (Durchsatz bzw. Massen- oder Volumenstrom) von Betonmischung und Farbstoffen in Abhängigkeit von der Betonrezeptur bzw. vom Zementgehalt übersetzt. Daraus wiederum und aus aktuellen Messwerten der verschiedenen Sensoren, die gewissermaßen als Regelantwort oder Feedback in die Anlagensteuerung 18 eingehen, werden konkrete Ansteuerdaten für den Roboterarm 4, die Betonförderpumpe 14, die Erstarrungsbeschleuniger-Förderpumpe 38, die Farbpumpen 60 und die Düsennadeln 68 der Farbeinspritzung (ventilgesteuerte Einspritzung) abgeleitet und an die zugehörigen Stellglieder übermittelt.

Wesentlich bei der Steuerung der Farbeinspritzung ist die durch die Wegstrecke zwischen Farbeinspritzring 52 und Düsenauslass 12 am Extruder 8 bedingte Zeitverzögerung zwischen Verstellung der jeweiligen Düsennadel 68 und der dadurch bewirkten Farbänderung des am Düsenauslass 12 des Extruders 8 applizierten Betons. Durch die vergleichsweise langsame Strömungsgeschwindigkeit der Betonmischung im Förderkanal 26 ist dieser Verzögerungseffekt nicht zu vernachlässigen. Er muss vielmehr durch vorausschauende Berechnung bei der Ansteuerung der Farbeinspritzung im Prozessrechner der Anlagensteuerung 18 berücksichtigt werden, wenn das fertige Objekt saubere Farbkonturen wie gewünscht haben soll. Genau dieses Steuerverhalten ist vorliegend bei der Anlage gemäß FIG. 1 implementiert. Das heißt, die Anlagensteuerung 18 berechnet vorrausschauend anhand des digitalen Pfadprotokolls, wann der Extruder 8 einen Punkt erreichen wird, an dem ein Farbwechsel ansteht und beaufschlagt unter Berücksichtigung der empirisch bekannten oder durch Messung ermittelten Verzögerungszeit die Düsennadeln 68 der Farbeinspritzdüsen 56 vorab, so dass der Farbwechsel am Düsenauslass 12 genau zum gewünschten Zeitpunkt erfolgen wird.

Zur Verdeutlichung typischer Dimensionen werden abschließend einige beispielhafte Zahlenwerte genannt:
a) Durchmesser und Längen:
   - Betonförderschlauch 16
      o Dimensionierung abhängig von Korngröße der Zuschlagsstoffe im Beton, üblicherweise 4-facher Durchmesser des Größtkorns
      o Bevorzugter Durchmesser von 25 bis 100 mm
      o Typische Schlauchlänge 8 m
   - Erstarrungsbeschleuniger-Förderschlauch 36
      o Bevorzugter Innendurchmesser von 3 bis 10 mm
      o Typische Schlauchlänge 10 m
      o Erstarrungsbeschleuniger beginnt bei zu hohen Fließgeschwindigkeiten und Arbeitsdrücken sich stark abzulagern, da Feststoffe in der Emulsion enthalten sind.
   - Förderschlauch für Flüssigpigment/Farbe, d. h. Farbleitung 62
      o Bevorzugter Innendurchmesser von 3 bis 10 mm
      o Typische Schlauchlänge 10 m
      o Flüssigpigment beginnt bei zu hohen Fließgeschwindigkeiten und Arbeitsdrücken sich stark abzulagern, da Feststoffe in der Emulsion sind.
b) Fördermengen/Fließgeschwindigkeiten/Arbeitsdruck:
   - Beton
      o Fördermenge 10 bis 70 l/min, bevorzugt 25 bis 30 l/min (Liter/Minute)
      o Arbeitsdruck bis zu 15 bar, vorzugsweise rund 5 bar
      o Fließgeschwindigkeit im Förderkanal 26 typischerweise von 0,08 bis 0,2 m/s, vorzugsweise 0,12 m/s, in der Mischkammer ggf. etwas herabgesetzt.
   - Beschleuniger
      o Fördermenge 0,05 bis 2 l/min
      o Typischerweise 2 bis 6 % der Zementmenge
      o Bevorzugt ca. 4% der Zementmenge, ca. 0,2 bis 0,45 l/min
      o Verhältnis Beton zu Beschleuniger hängt von vielen Faktoren ab (Raumtemperatur, Materialtemperatur von Beton und Beschleuniger, Standzeit des Betons im Schlauch/Pumpe/Mischer, Luftfeuchtigkeit).
      ∘ Arbeitsdruck zwischen 5 und 25 bar, vorzugsweise 5 bis 12 bar, bevorzugt 1,5 bis 2-facher Druck des Beton-Arbeitsdrucks.
   - Farbe
      o Fördermenge ca. 2 bis 15 % der Zementmenge
      o Menge abhängig von Farbintensität und verwendetem Zement
      o Üblicherweise bei Weißzement ca. 5% der Zementmenge, bevorzugt 0,25 bis 0,55 l/min
      o Üblicherweise bei Grauzement ca. 8% der Zementmenge, bevorzugt 0,35 bis 0,65 l/min
      o Arbeitsdruck zwischen 5 und 25 bar, vorzugsweise 5 bis 12 bar, bevorzugt 1,5 bis 2-facher Druck des Beton-Arbeitsdrucks.
c) Zeiträume und Distanzen:
   - Beschleuniger im Extruder legt eine Strecke von ca. 40 cm vom Verteilerring 32 bis zum Düsenauslass 12 zurück und benötigt bei einer Fließgeschwindigkeit im Förderschlauch von 0,12 m/s eine Zeit von rund 3,3 s.
   - Farbe im Extruder legt eine Strecke von ca. 30 cm vom Farbeinspritzring 54 zum Verteilerring 32 zurück, entsprechend einer Zeitdauer von 2,5 s. Anschließend folgt die Strecke vom Verteilerring 32 zum Düsenauslass 12.
   - Insgesamt besteht eine die Verzögerung von ca. 6 s ab Einspritzung, bis die Farbe am Düsenauslass 12 erkennbar ist.
   - Bis sich die Mischkammer optimal aufgefüllt hat, dauert das ganze ca. 10 Sekunden.

Konkret berücksichtigt die vorausschauende Farbsteuerung in diesem Beispiel eine Verzögerungszeit (Steuerzeit) von rund 6 s zwischen Farbeinspritzung und Extruderauslass.

Soweit im vorliegenden Text von Beton die Rede ist, wird darunter dem fachüblichen Verständnis folgend bevorzugt ein Baustoff auf der Basis von Zement (Bindemittel), Gesteinskörnung (Zuschlag) mit Mindestkorngröße von 5 mm, Wasser sowie ggf. Betonzusatzstoffen und Betonzusatzmitteln verstanden. Es kann sich dabei aber auch um Mörtel oder ähnliche, nach Zugabe von Wasser temporär fließfähige und mit der Zeit abbindende Baustoffe handeln, ggf. mit geringeren Korngrößen < 5 mm. Mit anderen Worten ist das beschriebene Konzept beispielsweise auch bei Kalkmörtel oder anderen Mörtelarten anwendbar, und der Begriff "Beton" soll derartige Varianten mit umfassen.

Die Begriffe "Roboter" und "Roboterarm" sind im vorliegenden Text weit auszulegen und umfassen neben bevorzugten 4, 5 oder 6-Achs-Robotern auch sonstige elektrisch, pneumatisch und/oder hydraulisch angetriebene mechanische Verstellvorrichtungen, die es ermöglichen, den 3D-Druckkopf entlang eines vorgegebenen Weges zu verfahren.

Prinzipiell könnte bei kleineren zu fertigenden Objekten der Druckkopf auch raumfest installiert sein, während ein darunter befindlicher Objekttisch - und mit ihm das Objekt während der Fertigung - relativ zum Druckkopf verfahrbar ist.

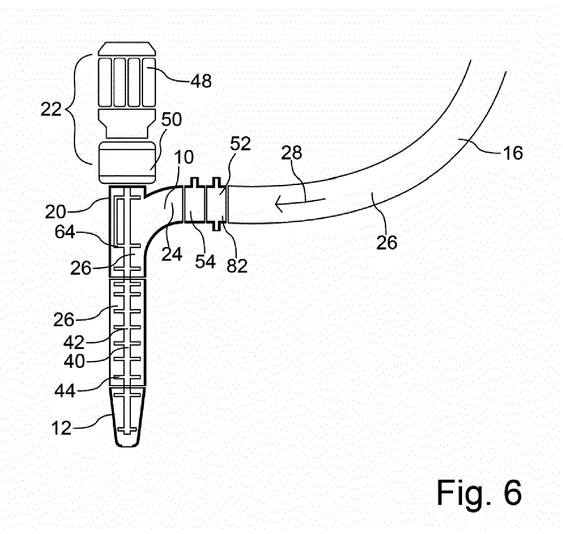

Eine nicht beanspruchte alternative Ausführung eines Extruders 8 ist in FIG. 6 dargestellt. Im Unterschied zu der Ausführung gemäß FIG. 2 ist hier keine Einspritzung von Erstarrungsbeschleuniger durch die Einspritzvorrichtung 80 vorgesehen. Demenentsprechend fehlt hier der aus FIG. 2 bekannte Verteilerring 32 bzw. die Einspritzvorrichtung 80. Alles andere entspricht der Ausführung gemäß FIG. 2. Konsequenterweise können bei der umliegenden Anlage gemäß FIG. 1 der zugehörige Förderschlauch 36 und die Förderpumpe 38 entfallen. Diese Variante bietet sich an für bestimmte Betonsorten, betonähnliche oder weitere Auftragsmaterialien, etwa Geopolymere, die beim 3D-Druck keinen Erstarrungsbeschleuniger benötigen. Alternativ kann eine Beimischung von Erstarrungsbeschleuniger noch vor der Betonförderpumpe 14 vorgesehen sein. Das Mischrohr 30 bleibt bei der Ausführung gemäß FIG. 6 erhalten, hat nunmehr aber nur noch die Aufgabe, den Beton bzw. das Auftragsmaterial und die am Farbeinspritzring 52 eingespritzten Farbstoffe zu mischen.

Dementsprechend umfasst die Variante gemäß FIG. 6 eine Vorrichtung 2 zum 3D-Betondruck mit einem bewegbar an einem Roboterarm 4 oder einer ähnlichen Verstellvorrichtung befestigten Extruder 8, wobei
- der Extruder 8 einen Einlass 10 und einen Düsenauslass 12 und dazwischen liegend einen Förderkanal 26 oder zumindest einen Abschnitt davon für einen Flüssigbetonstrom aufweist,
- dem Extruder 8 eine Betonförderpumpe 14 und ein Betonförderschlauch 16 zur Zuführung des Flüssigbetons vorgeschaltet sind,
- eine Einspritzvorrichtung 82 zur Einspritzung mindestens eines Farbstoffs in den Flüssigbetonstrom vorgesehen ist, und
- der Extruder 8 ein stromabwärts der Einspritzvorrichtung 82 angeordnetes Mischrohr 30 oder eine Mischkammer zur Mischung des Flüssigbetonstroms und des eingespritzten Farbstoffs aufweist.

Auch hier ist die Verzögerungszeit zwischen Farbeinspritzung am Farbeinspritzring 52 und Materialauftrag am Düsenauslass 12 zu beachten.

### Bezugszeichenliste

- 2: Vorrichtung zum 3D-Betondruck
- 4: Roboterarm
- 6: Industrieroboter
- 8: Extruder
- 10: Einlass
- 12: Düsenauslass
- 14: Betonförderpumpe
- 16: Betonförderschlauch
- 18: Anlagensteuerung
- 20: Zwischenstück
- 22: Getriebemotor
- 24: Anschlussstutzen
- 26: Förderkanal
- 28: Strömungsrichtung
- 30: Mischrohr
- 32: Verteilerring
- 36: Erstarrungsbeschleuniger-Förderschlauch
- 38: Erstarrungsbeschleuniger-Förderpumpe
- 40: Mischer
- 42: Mischerwelle
- 44: Mischelement
- 48: Antriebsmotor
- 50: Untersetzungsgetriebe
- 52: Farbeinspritzring
- 54: Spülwassereinspritzring
- 56: Farbeinspritzdüse
- 58: Farbvorratsbehälter
- 60: Farbpumpe
- 62: Farbleitung
- 64: Mischelement
- 66: Düsenkanal
- 68: Düsennadel
- 70: Düsenauslass
- 72: Sensor
- 74: Messleitung
- 76: Steuerleitung
- 80: Einspritzvorrichtung für Erstarrungsbeschleuniger
- 82: Einspritzvorrichtung für Farbstoff
- α: Neigungswinkel

## Patentansprüche

1. Vorrichtung (2) zum 3D-Betondruck mit einem bewegbar an einem Roboterarm (4) oder einer ähnlichen Verstellvorrichtung befestigten Extruder (8), wobei
• der Extruder (8) einen Einlass (10) und einen Düsenauslass (12) und dazwischen liegend einen Förderkanal (26) oder zumindest einen Abschnitt davon für einen Flüssigbetonstrom aufweist,
• dem Extruder (8) eine Betonförderpumpe (14) und ein Betonförderschlauch (16) zur Zuführung des Flüssigbetons vorgeschaltet sind,
• der Extruder (8) eine Einspritzvorrichtung (80) zur Einspritzung eines Erstarrungsbeschleunigers in den Flüssigbetonstrom aufweist,
• der Extruder (8) ein Mischrohr (30) oder eine Mischkammer zur Mischung des Flüssigbetonstroms und des eingespritzten Erstarrungsbeschleunigers aufweist,
• eine Einspritzvorrichtung (82) zur Einspritzung mindestens eines Farbstoffs in den Flüssigbetonstrom vorgesehen ist,
und wobei die Einspritzvorrichtung (82) für den jeweiligen Farbstoff einen Farbeinspritzring (52) mit mindestens einer zugehörigen Farbeinspritzdüse (56) umfasst, wobei die jeweilige Farbeinspritzdüse (56) über eine Farbpumpe (60) und eine Farbleitung (62) mit einem Farbvorratsbehälter (58) verbunden ist, und wobei diese Komponenten zusammen einen Farbstrang bilden, und wobei mehrere Farbstränge vorhanden sind und jeder Farbstrang unabhängig von den anderen Farbsträngen ist, **dadurch gekennzeichnet, dass** die Einspritzvorrichtung (82) für den jeweiligen Farbstoff in Strömungsrichtung (28) des Flüssigbetonstroms gesehen vor der Einspritzvorrichtung (80) des Erstarrungsbeschleunigers angeordnet ist.

2. Vorrichtung (2) nach Anspruch 1, wobei ein gemeinsamer Farbeinspritzring (52) mit einer Mehrzahl von auf dem Ringumfang verteilten Farbeinspritzdüsen (56) vorhanden ist.

3. Vorrichtung (2) nach einem der vorangehenden Ansprüche, wobei die jeweilige Farbeinspritzdüse (56) eine verstellbare Düsennadel (68) zur Einstellung des Einspritzdrucks und/oder der Einspritzmenge aufweist.

4. Vorrichtung (2) nach Anspruch 1, wobei vier Farbstränge mit Farben gemäß dem CMYK-Farbmodell und optional ein zusätzlicher weißer Farbstrang vorhanden sind.

5. Vorrichtung (2) nach einem der vorangehenden Ansprüche, wobei der Extruder (8) einlassseitig einen Anschlussstutzen (24) aufweist und der Farbeinspritzring (52) zwischen dem Betonförderschlauch (16) und dem Anschlussstutzen (24) angeordnet ist.

6. Vorrichtung (2) nach einem der vorangehenden Ansprüche, wobei eine Anlagensteuerung (18) vorhanden ist, die eingerichtet ist, eine farbige digitale Repräsentation des zur erstellenden Bauwerks oder Objekts in einen mittels des Roboterarms (4) realisierbaren Pfad für den Düsenauslass (12) des Extruders (8) zu konvertieren und entsprechend der gewünschten Farbgebung die Einspritzvorrichtung (82) für den jeweiligen Farbstoff anzusteuern.

7. Vorrichtung (2) nach Anspruch 6, wobei die Anlagensteuerung (18) derart ausgelegt ist, dass eine zeitliche Verzögerung zwischen der Einspritzung der jeweiligen Farbe in den Flüssigbetonstrom und dem Austritt am Düsenauslass (12) vorausschauend berücksichtigt wird.

8. Verfahren zur Herstellung eines Bauwerks oder Objekts durch 3D-Betondruck unter Verwendung einer Vorrichtung (2) nach einem der vorangehenden Ansprüche, wobei ein Flüssigbetonstrom durch einen Extruder (8) geleitet und an einem Düsenauslass (12) appliziert wird, wobei in dem Extruder (8) ein Erstarrungsbeschleuniger in den Flüssigbetonstrom eingespritzt wird, und wobei in Strömungsrichtung (28) des Flüssigbetonstroms gesehen vor der Einspritzung des Erstarrungsbeschleunigers mindestens ein Farbstoff in den Flüssigbetonstrom zur Einfärbung desselben eingespritzt wird.

9. Verfahren nach Anspruch 8, wobei der Extruder (8) durch eine Anlagensteuerung (18) mittels eines Industrieroboters (6) entlang eines vorgegebenen Pfades bewegt wird und der jeweilige Farbstoff gemäß einer gewünschten Farbgebung des Bauwerks oder Objekts in den Flüssigbetonstrom eingespritzt wird, und wobei eine zeitliche Verzögerung zwischen der Einspritzung der jeweiligen Farbe in den Flüssigbetonstrom und dem Austritt am Düsenauslass (12) vorausschauend berücksichtigt wird.

10. Verfahren nach Anspruch 8 oder 9, wobei die jeweilige Farbeinspritzdüse (56) einen steuerbaren Überströmquerschnitt aufweist, und wobei zur Einstellung des Überströmquerschnitts ein gemessener Druck des Flüssigbetonstroms herangezogen wird.

11. Verfahren nach Anspruch 10, wobei der Einspritzdruck des jeweiligen Farbstoffs im Bereich des 1,5 bis 2-fachen des Arbeitsdrucks des Flüssigbetonstroms eingestellt wird.

## Claims

1. A device (2) for 3D concrete printing with an extruder (8) attached movably to a robot arm (4) or to a similar adjustment device, wherein
• the extruder (8) comprises an inlet (10) and a nozzle outlet (12) and a delivery channel (26) lying in between or at least a section thereof for a liquid concrete stream,
• a concrete delivery pump (14) and a concrete delivery hose (16) for feeding the liquid concrete are connected upstream of the extruder (8),
• the extruder (8) comprises an injection device (80) for injecting a setting accelerator into the liquid concrete stream,
• the extruder (8) has a mixing tube (30) or a mixing chamber for mixing the liquid concrete stream and the injected setting accelerator,
• an injection device (82) is provided for injecting at least one colourant into the liquid concrete stream,
and wherein the injection device (82) for the respective colourant comprises a colour injection ring (52) with at least one associated colour injection nozzle (56), wherein the respective colour injection nozzle (56) is connected via a colour pump (60) and a colour line (62) to a colour storage container (58), and wherein these components together form a colour strand, and wherein a plurality of colour strands are present and each colour strand is independent of the other colour strands, **characterised in that** the injection device (82) for the respective colourant is arranged upstream of the injection device (80) of the setting accelerator, as viewed in the flow direction (28) of the liquid concrete stream.

2. The device (2) according to claim 1, wherein a common colour injection ring (52) is present with a plurality of colour injection nozzles (56) distributed on the ring circumference.

3. The device (2) according to any one of the preceding claims, wherein the respective colour injection nozzle (56) comprises an adjustable nozzle needle (68) for adjusting the injection pressure and/or the injection quantity.

4. The device (2) according to claim 1, wherein four colour strands with colours according to the CMYK colour model and optionally an additional white colour strand are present.

5. The device (2) according to any one of the preceding claims, wherein the extruder (8) comprises a connection pipe (24) at the inlet side and the colour injection ring (52) is arranged between the concrete delivery hose (16) and the connection pipe (24).

6. The device (2) according to any one of the preceding claims, wherein a system control (18) is present, which is designed to convert a coloured digital representation of the structure or object to be created into a path for the nozzle outlet (12) of the extruder (8), which can be implemented by means of the robot arm (4), and to control the injection device (82) for the respective colourant according to the desired colouring.

7. The device (2) according to claim 6, wherein the system control (18) is designed such that a time delay between the injection of the respective colourant into the liquid concrete stream and the exit at the nozzle outlet (12) is taken into account in advance.

8. A method for producing a structure or object by 3D concrete printing using a device (2) according to any one of the preceding claims, wherein a liquid concrete stream is passed through an extruder (8) and applied at a nozzle outlet (12), wherein a setting accelerator is injected into the liquid concrete stream in the extruder (8), and wherein at least one colourant is injected into the liquid concrete stream for the colouring thereof before the injection of the setting accelerator, as viewed in the flow direction (28) of the liquid concrete stream.

9. The method according to claim 8, wherein the extruder (8) is moved along a predetermined path by a system control (18) by means of an industrial robot (6) and the respective colourant is injected into the liquid concrete stream according to a desired colouring of the structure or object, and wherein a time delay between the injection of the respective colourant into the liquid concrete stream and the exit at the nozzle outlet (12) is taken into account in advance.

10. The method according to claim 8 or 9, wherein the respective colour injection nozzle (56) comprises a controllable overflow cross-section and wherein a measured pressure of the liquid concrete stream is used to set the overflow cross-section.

11. The method according to claim 10, wherein the injection pressure of the respective colourant is adjusted in the region of 1.5 to 2 times the working pressure of the liquid concrete stream.

## Revendications

1. Dispositif (2), destiné à imprimer du béton en 3 D, pourvu d'une extrudeuse (8), placée de manière mobile sur un bras de robot (4) ou sur un dispositif d'ajustage analogue,
• l'extrudeuse (8) comportant une entrée (10) et une sortie (12) de filière et situé(e) entre celles-ci, un canal de convoyage (26) ou au moins une partie de celui-ci, pour un flux de béton fluide,
• en amont de l'extrudeuse (8) étant montés une pompe de convoyage (14) de béton et un flexible de convoyage (16) de béton, pour l'alimentation du béton fluide,
• l'extrudeuse (8) comportant un dispositif d'injection (80) pour injecter un accélérateur de prise dans le flux de béton fluide,
• l'extrudeuse (8) comportant un tube de mélange (30) ou une chambre de mélange pour mélanger le flux de béton fluide et l'accélérateur de prise injecté,
• un dispositif d'injection (82) étant prévu, pour injecter au moins un colorant dans le flux de béton fluide,
et le dispositif d'injection (82) pour le colorant concerné comprenant une bague d'injection (52) de couleur, pourvue d'au moins un injecteur (56) de couleur associé, l'injecteur (56) de couleur concerné étant relié par l'intermédiaire d'une pompe à couleur (60) et d'une conduite de couleur (62) avec un réservoir de réserve (58) de couleur et lesdits composants formant conjointement une ligne de coloration et plusieurs lignes de coloration étant présentes et chaque ligne de coloration étant indépendante des autres lignes de coloration, **caractérisé en ce que**, considéré dans la direction d'écoulement (28) du flux de béton fluide, le dispositif d'injection (82) pour le colorant concerné est placé à l'avant du dispositif d'injection (80) de l'accélérateur de prise.

2. Dispositif (2) selon la revendication 1, une bague d'injection (52) de couleur commune, pourvue d'une pluralité d'injecteurs (56) de couleur, distribués sur la circonférence de la bague étant présente.

3. Dispositif (2) selon l'une quelconque des revendications précédentes, l'injecteur (56) de couleur concerné comportant une aiguille (68) d'injecteur ajustable, pour le réglage de la pression d'injection et / ou de la quantité d'injection.

4. Dispositif (2) selon la revendication 1, quatre lignes de coloration, avec des couleurs selon le modèle de couleurs CMYK et en option un ligne de coloration blanche additionnelle étant présentes.

5. Dispositif (2) selon l'une quelconque des revendications précédentes, l'extrudeuse (8) comportant du côté entrée une tubulure de raccordement (24) et la bague d'injection (52) de couleur étant placée entre le flexible de convoyage (16) de béton et la tubulure de raccordement (24).

6. Dispositif (2) selon l'une quelconque des revendications précédentes, un système de commande (18) de l'installation étant présent, qui est configuré pour convertir une représentation numérique en couleurs de l'édifice ou de l'objet qui doit être créé en un chemin réalisable au moyen du bras de robot (4) pour la sortie (12) de filière de l'extrudeuse (8) et pour actionner le dispositif d'injection (82) pour le colorant concerné, en fonction du coloris souhaité.

7. Dispositif (2) selon la revendication 6, le système de commande (18) de l'installation étant conçu de telle sorte qu'une temporisation entre l'injection de la couleur concernée dans le flux de béton fluide et la sortie en sortie (12) de filière soit prise en compte par anticipation.

8. Procédé, destiné à créer un édifice ou un objet par impression en 3D de béton en utilisant un dispositif (2) selon l'une quelconque des revendications précédentes, un flux de béton fluide étant dirigé à travers une extrudeuse (8) et appliqué sur une sortie (12) de filière, dans l'extrudeuse (8), un accélérateur de prise étant injecté dans le flux de béton fluide et considéré dans la direction d'écoulement (28) du flux de béton fluide, avant l'injection de l'accélérateur de prise, au moins un colorant étant injecté dans le flux de béton fluide pour teinter celui-ci dans la masse.

9. Procédé selon la revendication 8, l'extrudeuse (8) étant déplacée par un système de commande (18) de l'installation au moyen d'un robot industriel (6) le long d'un chemin prédéfini et le colorant concerné étant injecté dans le flux de béton fluide en fonction du coloris souhaité pour l'édifice ou l'objet et une temporisation étant prise en compte par anticipation entre l'injection de la couleur concernée dans le flux de béton fluide et la sortie à la sortie (12) de filière.

10. Procédé selon la revendication 8 ou 9, l'injecteur (56) de couleur concerné comportant une section transversale à trop-plein susceptible d'être commandée et pour régler la section transversale à trop-plein, une pression mesurée du flux de béton fluide étant prise en considération.

11. Procédé selon la revendication 10, la pression d'injection du colorant concerné étant réglée dans un ordre de 1,5 à 2 fois la pression de travail du flux de béton fluide.
